# EUROPÄISCHE PATENTSCHRIFT

(11) **EP 2 315 069 B1**
(45) Veröffentlichungstag und Bekanntmachung des Hinweises auf die Patenterteilung: **31.10.2012**
(21) Anmeldenummer: 11154692.5
(22) Anmeldetag: 24.07.2007
(51) Int. Cl.: G02C 1/02, G02C 5/00

(54) **Verfahren zur Herstellung einer randlosen Brille**
Method for manufacturing frameless glasses
Procédé destiné à la fabrication de lunettes sans branches

(43) Veröffentlichungstag der Anmeldung: 27.04.2011
(62) Teilanmeldung aus: 07113025.6
(73) Patentinhaber: Anger, Wilhelm, 5020 Salzburg (AT)
(72) Erfinder: Anger, Wilhelm, 5020 Salzburg (AT)
(74) Vertreter: TBK

(56) Entgegenhaltungen:
- EP-A- 0 361 547
- EP-A- 1 584 967
- WO-A-2004/096496
- CH-A- 196 011
- DE-A1-102005 006 980
- FR-A- 1 293 593

## Beschreibung

Die Erfindung bezieht sich auf ein Verfahren zur Herstellung einer randlosen Brille. Eine randlose Brille umfasst zwei Brillengläser und eine Brücke, die zwischen den beiden Brillengläsern angeordnet und mit diesen verbunden ist, wobei die Brücke Seitenstege oder einen Sattelsteg trägt oder mit dem Sattelsteg bzw. den Seitenstegen einstückig ausgebildet ist. Ferner umfasst eine randlose Brille zwei Backen, die jeweils mit einem der zwei Brillengläser an einem von der Brücke abgewandten Randbereich des Brillenglases verbunden sind, und zwei Bügel, die jeweils gelenkig mit einer der beiden Backen verbunden sind. Eine solche randlose Brille weist keine entlang den oberen Rändern und/oder den unteren Rändern der Brillengläser verlaufenden Fassungsteile auf, die die Brücke mit den beiden Backen verbinden. Vielmehr wird für den Zusammenhalt zwischen Backen und Brücke durch die dazwischen angeordneten Brillengläser gesorgt. Daher ist es notwendig, die Backen und die Brücke mechanisch hinreichend fest mit den Brillengläsern zu verbinden.

Es ist bekannt, die Verbindung zwischen den Backen und der Brücke einerseits und dem jeweiligen Brillenglas andererseits dadurch herzustellen, dass im Brillenglas am Anbringungsort für die Backen bzw. die Brücke zunächst zumindest ein Durchgangsloch ausgebildet wird. In das Durchgangsloch kann eine Schraube bzw. ein Niet eingesetzt werden, um die Backe bzw. die Brücke mit dem Brillenglas zu verschrauben oder zu vernieten. Bekannt ist es auch, an dem zu befestigenden Bauteil, d.h. an der Backe oder der Brücke, einen Zapfen vorzusehen, der im Durchgangsloch des Brillenglases verklebt oder verdübelt wird. Diese bekannten Verbindungsarten haben den Nachteil, dass in den Brillengläsern Durchgangslöcher ausgebildet werden müssen. Während der Ausbildung der Durchgangslöcher beispielsweise durch Bohren oder Fräsen besteht die Gefahr, dass das Brillenglas bricht, was zu einem beträchtlichen Ausschuss bei der Herstellung solcher randlosen Brillen führt. Ferner verursachen die Durchgangslöcher in den Brillengläsern Spannungen, die eine erhöhte Bruchgefahr beim Gebrauch der Brille zur Folge haben.

Es ist ferner bekannt, bei einer randlosen Brille die Brücke und die Backen mit den Brillengläsern mittels eines Klebstoffes zu verbinden (siehe die Druckschriften DE 9 402 861 U1, FR 2 793 040 B). Bei diesen bekannten randlosen Brillen werden die Brücke und die Backen mit den Rändern der Brillengläser verklebt. Durch dieses Verkleben von Brücke und Backe mit den Brillengläsern soll und kann vermieden werden, dass Durchgangslöcher in den Brillengläsern ausgebildet werden müssen und vorhanden sind, um die Brücke und die Backe mit den Brillengläsern zu verbinden.

Es ist ferner bereits vorgeschlagen worden, bei einer randlosen Brille die Brücke und/oder die Backen mit den Brillengläsern auf deren Vorder- oder Rückseite zu verkleben (siehe die Druckschriften DE 102005006980 A1, US 5 805 259 A, FR 2 624 278 A1 und FR 2 749 088 A1). Wenn die Backen und die Brücke mit der Vorder- oder der Rückseite der Brillengläser verklebt werden, hat dies den Vorteil, dass auf der Vorder- bzw. Rückseite eine größere Fügefläche zum Verkleben zur Verfügung steht als an den Rändern der Brillengläser, die bei Brillengläsern mit hoher Brechzahl schmal sein können. Gemäß der Druckschrift FR 2 749 088 A1 ist vorgesehen, dass der Klebstoff ein durch Strahlung härtbarer Klebstoff ist und dass die Brillengläser an den Anbringungsorten, an denen Verbindungselemente der Backen und der Brücken mit den Brillengläsern verklebt werden sollen, poliert werden, damit die Strahlung, mit deren Hilfe der Klebstoff gehärtet wird, möglichst ungeschwächt zum Klebstoff gelangen kann.

Bisherige Bemühungen, eine randlose Brille dadurch herzustellen, dass die Backen und die Brücke mit der Vorderseite oder der Rückseite der Brillengläser verklebt werden, haben nicht zum Erfolg geführt, weil keine dauerhaft festen Klebeverbindungen erreicht werden konnten und die Klebeverbindungen häufig gebrochen sind.

Ein Verfahren zur Herstellung einer randlosen Brille mit den Merkmalen des Oberbegriffs von Patentanspruch 1 ist bekannt durch die bereits vorstehend erwähnte Druckschrift DE 10 2005 006 980 A1.

Der Erfindung liegt die Aufgabe zugrunde, ein Verfahren zur Herstellung einer randlosen Brille zu schaffen, bei dem die Brücke und die Backen mit den Brillengläsern dadurch verbunden werden, dass Brücke und Backen mit der Vorderseite oder der Rückseite der Brillengläser verklebt werden, wobei die Klebeverbindungen dauerhaft fest sein sollen und solche dauerhaft festen Klebeverbindungen zuverlässig und regelmäßig erreicht werden.

Diese Aufgabe wird erfindungsgemäß durch das Verfahren gemäß Patentanspruch 1 gelöst.

Das Aufbringen einer Beschichtung auf die Vorderseite und die Rückseite der Brillen-Rohgläser, wie es gemäß Schritt g) von Patentanspruch 1 vorgesehen ist, ist an sich bekannt.

Erfindungsgemäß wird die Beschichtung an den Anbringungsorten für die Verbindungselemente der Brücke und der Backen abgetragen, um dadurch an den Brillengläsern Fügeflächen auszubilden, an denen die Verklebung mit den Fügeflächen der Backen und der Brücke erfolgt. Durch das Abtragen der Beschichtung an den Anbringungsorten wird im Bereich der Fügeflächen das Grundmaterial der Brillengläser freigelegt. Es ist gefunden worden, dass dann, wenn die Fügeflächen an den Brillengläsern die stoffliche Beschaffenheit von deren Grundmaterial haben, eine dauerhaft feste Klebeverbindung erreicht werden kann.

Das erfindungsgemäße Verfahren hat den grundsätzlichen Vorteil, dass in den Brillengläsern keine Löcher, seien es Durchgangslöcher oder Sacklöcher, und keine Ausnehmungen ausgebildet werden. Dadurch sind die Nachteile vermieden, die durch Bohren oder Fräsen der Brillengläser zur Ausbildung von Löchern oder Ausnehmungen verursacht würden. Weil die Brillengläser nicht gebohrt oder gefräst werden, kann es nicht zum Bruch der Brillengläser durch Bohren oder Fräsen und entsprechendem Ausschuss bei der Brillenherstellung kommen. Aus dem gleichen Grund werden in den Brillengläsern keine Spannungen induziert, die beim Gebrauch der Brille einen Glasbruch zur Folge haben könnten. Die Brillengläser der erfindungsgemäß hergestellten randlosen Brille sind frei von Spannungen.

Ferner hat das erfindungsgemäße Verfahren den Vorteil, dass nach diesem Verfahren eine Brille mit beschichteten Brillengläsern hergestellt werden kann. Das Beschichten der Brillengläser ist heutzutage üblich, um die Oberflächen der Brillengläser mit gewünschten Eigenschaften wie z.B. schmutzabweisenden Eigenschaften und Kratzfestigkeit zu versehen. Dies bedeutet, dass trotz des Verklebens der Verbindungselemente mit der Vorderseite oder der Rückseite der Brillengläser, das aus den im Folgenden erörterten Gründen vorteilhaft ist, nicht auf das Beschichten der Brillengläser verzichtet zu werden braucht.

Ein weiterer Vorteil des erfindungsgemäßen Verfahrens besteht darin, dass die Verbindungselemente der Backen und der Brücke mit der Vorderseite oder der Rückseite der Brillengläser verklebt werden. Auf der Vorderseite bzw. der Rückseite der Brillengläser steht eine ausreichend große Oberfläche für die Ausbildung der Fügeflächen an den Brillengläsern zur Verfügung, so dass die Fügeflächen an den Brillengläsern und den Verbindungselementen von Backen und Brücken ausreichend groß dimensioniert werden können, um eine feste Klebeverbindung zu erreichen. Dies unterscheidet das erfindungsgemäße Verfahren vorteilhaft von denjenigen Verfahren, bei denen die Brücke und die Backen mit den Rändern der Brillengläser verklebt werden, weil die Ränder der Brillengläser häufig schmal sind, insbesondere bei Nicht-Korrektionsbrillen wie z.B. Sonnenbrillen, und bei Korrektionsbrillen, deren Brillengläser eine hohe Brechzahl haben. Weil erfindungsgemäß die Verbindungselemente der Backen und der Brücke mit der Vorderseite oder der Rückseite der Brillengläser verklebt werden, führen von der Brücke oder den Backen zu den Brillengläsern übertragene Kräfte zu geringeren Spannungen in den Brillengläsern, als wenn die Verbindungselemente ausschließlich oder überwiegend mit den Rändern der Brillengläser verklebt werden. Klargestellt sei, dass es bei dem erfindungsgemäßen Verfahren nicht ausgeschlossen ist, dass die Verbindungselemente lediglich zusätzlich auch mit den Rändern der Brillengläser verklebt werden.

Schließlich bestehen ein wesentliches Merkmal und ein wesentlicher Vorteil des erfindungsgemäßen Verfahrens darin, dass die Beschichtung an den Anbringungsorten abgetragen wird zur Bildung der Fügeflächen an den Brillengläsern. Es ist gefunden worden, dass erst durch diese Maßnahme zuverlässig dauerhaft feste Klebeverbindungen erreicht werden, und zwar unter Verwendung eines Klebstoffs aus der Menge der existierenden, an sich bekannten Klebstoffe.

In vorteilhafter Ausbildung der Erfindung kann vorgesehen sein, dass die Beschichtung abgetragen wird mittels eines Stirnschleifwerkzeugs, das eine hochfrequente Drehbewegung oder Hin- und Herbewegung in Kontakt mit der Vorderseite bzw. Rückseite des Brillenglases bei einer Frequenz im Bereich von 15 bis 40 kHz, vorzugsweise im Bereich von 24 bis 30 kHz ausführt. Es ist gefunden worden, dass, wenn das Abtragen der Beschichtung auf diese Weise erfolgt, der Schleifvorgang auf einfache Weise auf das Abtragen der üblicherweise sehr dünnen Beschichtung begrenzt werden kann und dass das Grundmaterial der Brillengläser freigelegt wird, ohne dass Spannungen im Brillenglas erzeugt werden.

In vorteilhafter Ausbildung der Erfindung kann ferner vorgesehen sein, dass die Backen und die Brücke jeweils gefertigt werden aus einem Grundkörper und dem Verbindungselement bzw. den Verbindungselementen, wobei die Verbindungselemente aus einem flexiblen Kunststoff mit geringer Härte gefertigt werden und der Grundkörper aus einem anderen Werkstoff gefertigt wird als dem der Verbindungselemente. Dies ermöglicht es, den Grundkörper aus einem im Hinblick auf die mechanischen Beanspruchungen der Brille hinreichend festen Werkstoff, einschließlich Metall, zu fertigen und den Verbindungselementen eine Pufferfunktion zu geben, die die Klebschicht zwischen den Fügeflächen vor Stoßbelastungen schützt.

Als besonders geeignet haben sich aliphatisches, thermoplastisches Polyether-Urethan als Werkstoff der Verbindungselemente und Cyanacrylatklebstoff als Klebstoff erwiesen.

Weitere vorteilhafte Ausgestaltungen der Erfindung sind in den abhängigen Ansprüchen definiert.

Das erfindungsgemäße Verfahren ist anwendbar sowohl bei der Herstellung von Korrektionsbrillen als auch bei der Herstellung von Brillen ohne Korrektionswirkung wie beispielsweise Sonnenbrillen.

Die Erfindung wird im Folgenden anhand von Ausführungsbeispielen unter Bezugnahme auf die Zeichnungen näher erläutert. Es zeigen:
- Figur 1: eine perspektivische Ansicht eines ersten Ausfühungsbeispiels einer nach dem erfindungsgemäßen Verfahren hergestellten randlosen Brille;
- Figur 2: eine perspektivische Ansicht einer linken Backe der Brille gemäß Figur 1 von hinten;
- Figur 3: eine schematische Unteransicht, teilweise im Schnitt, des linken Randbereichs des linken Brillenglases der Brille gemäß Figur 1, wobei der Zustand dargestellt ist, den ein mit dem Brillen-Rohglas verklebtes Verbindungselement und ein zugeordneter Grundkörper der Backe einnehmen, bevor sie zusammengefügt werden;
- Figur 4 eine Figur 3: entsprechende Darstellung, wobei der Zustand nach dem Zusammenfügen von Verbindungselement und Grundkörper dargestellt ist;
- Figur 5: eine perspektivische Ansicht des linken Brillenglases der Brille gemäß Figur 1 von vorn mit der daran befestigten linken Backe;
- Figur 6: Schnittdarstellungen gemäß A-A bzw. B-B in Figur 2;
- Figur 7: ein Blockdiagramm der Verfahrensschritte des erfindungsgemäßen Verfahrens;
- Figur 8: ausschnittsweise einen Schnitt durch ein beschichtetes Brillenglas zur Erläuterung eines Schrittes des erfindungsgemäßen Verfahrens;
- Figur 9: eine perspektivische Ansicht eines Brillen-Rohglases;
- Figur 10: in perspektivischer Darstellung zwei an einer Montageplatte fixierte Brillengläser zur Erläuterung von Schritten des erfindungsgemäßen Verfahrens;
- Figur 11: ausschnittsweise einen Schnitt durch ein Brillenglas zur Erläuterung eines Schrittes des erfindungsgemäßen Verfahrens;
- Figur 12: ausschnittsweise einen Schnitt durch ein Brillenglas zur Erläuterung eines weiteren Schrittes des erfindungsgemäßen Verfahrens;
- Figuren 13 bis 16: Elemente einer Brille gemäß einem zweiten Ausführungsbeispiel einer nach dem erfindungsgemäßen Verfahren hergestellten randlosen Brille;
- Figuren 17 bis 20: Elemente eines dritten Ausführungsbeispiels einer nach dem erfindungsgemäßen Verfahren hergestellten randlosen Brille; und
- Figur 21: in perspektivischer Darstellung eine linke Backe einer Abwandlung des dritten Ausführungsbeispiels.

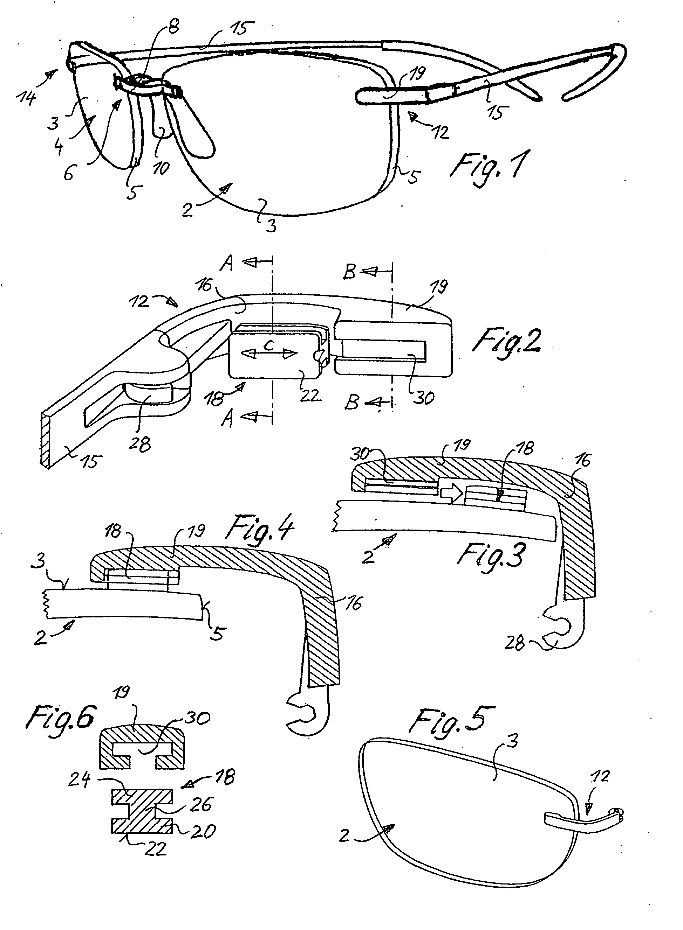

Im Folgenden wird zunächst anhand der Figuren 1 bis 6 ein erstes Ausführungsbeispiel einer erfindungsgemäß hergestellten randlosen Brille erläutert.

Figur 1 zeigt diese Brille in perspektivischer Ansicht von schräg vorn. Die Brille umfasst ein linkes Brillenglas 2, ein rechtes Brillenglas 4 und eine zwischen den beiden Brillengläsern angeordnete Brücke 6. Jedes der beiden Brillengläsern 2 und 4 hat eine in Figur 1 sichtbare Vorderseite 3, eine in Figur 1 nicht sichtbare Rückseite und einen umlaufenden Rand 5, der das Brillenglas radial außen, bezogen auf seinen optischen Mittelpunkt, begrenzt. Die Brücke 6 ist ein langgestrecktes Element, das zwischen den beiden Brillengläsern 2 und 4 angeordnet ist und diese miteinander verbindet. Die Brücke 6 besteht aus einem Grundkörper 8 und zwei in Figur 1 nicht dargestellten Verbindungselementen, die jeweils an einem Ende der Brücke 6 angeordnet sind und mit der in Figur 1 sichtbaren Vorderseite 3 des Brillenglases 2 bzw. 4 verklebt sind. Ein Stegbauteil 10 ist an der Brücke 6 befestigt und dient zur Abstützung der Brille an der Nase des Brillenträgers.

Die Brille weist ferner eine linke Backe 12 und eine rechte Backe 14 auf. Die Backen 12 und 14 sind jeweils mit einem Bügel 15 derart gelenkig verbunden, dass die Bügel 15 aus ihren in Figur 1 dargestellten geöffneten Stellungen geschwenkt werden können in Stellungen, in denen sie im Wesentlichen parallel zu den beiden Brillengläsern 2 und 4 verlaufen.

Die Backen 12 und 14 sind jeweils an einem von der Brücke 6 abgewandten Randbereich des Brillenglases 2 bzw. 4 mit diesem verbunden. Jede der beiden Backen 12 und 14 besteht aus einem Grundkörper 16 und einem Verbindungselement 18 (siehe Figur 2), wobei der Grundkörper 16 einen Schenkel 19 aufweist, der auf der Vorderseite 3 des zugeordneten Brillenglases 2 bzw. 4 angeordnet ist. Beim dargestellten Ausführungsbeispiel bestehen der Grundkörper 8 der Brücke 6 und der Grundkörper 16 der Backen 12 und 14 jeweils aus einem spritzgegossenen Kunststoff, beispielsweise aus einem Polyamid, wie es beispielsweise unter der Bezeichnung Trogamid von der Firma Degussa AG oder unter der Bezeichnung Grilamid von der Firma Ems-Chemie AG vertrieben wird, oder aus einem Polyetherimid, wie es beispielsweise von der Firma GE Plastics unter der Bezeichnung Ultem vertrieben wird.

Figur 2 zeigt in perspektivischer Ansicht die linke Backe 12 und deren Verbindungselement 18, das zum Verbinden der Backe 12 mit dem Brillenglas 2 und somit zum Befestigen der Backe 12 am Brillenglas 2 dient. Das Verbindungselement 18 und der Grundkörper 16 sind Elemente, die zunächst getrennt voneinander gefertigt werden und im Zuge der Herstellung der Brille miteinander verbunden werden.

Das Verbindungselement 18 besteht aus einem spritzgegossenen Kunststoff, beispielsweise einem aliphatischen, thermoplastischen Polyether-Polyurethan, wie es beispielsweise von der Firma Bayer AG Bayer Polymers unter der Bezeichnung Texin DP7-3007 vertrieben wird, das eine Härte von 50 bis 55 Shore D hat. Das Verbindungselement 18 hat im Wesentlichen die Form eines Quaders und umfasst eine Platte 20 mit einer Grundfläche 22, einen länglichen Kopf 24 und einen länglichen Steg 26, der die Platte 20 und den Kopf 24 miteinander verbindet. Der Kopf 24 hat in einem zu seiner Längsrichtung C senkrechten Querschnitt das in Figur 6 gezeigte Kopfprofil, bei dem es sich um ein sogenanntes Hammerkopfprofil handelt. Die Grundfläche 22 der Platte 20 des Verbindungselementes 18 bildet dessen Klebe- bzw. Fügefläche, d.h. diejenige Oberfläche, die mit einer komplementären Fügefläche auf der Vorderseite 3 des Brillenglases mittels eines Klebstoffes verklebt wird.

An ihrem dem Bügel 15 zugewandten Ende weist die Backe 12 ein Gelenkauge 28 auf, das in Eingriff mit einem (nicht gezeigten) Gelenkzapfen steht, der am Bügel 15 ausgebildet ist, so dass das Gelenkauge 28 und der Gelenkzapfen ein Gelenk in Form eines Scharniers bilden, in dem die Backe 12 und der Bügel 15 gelenkig miteinander verbunden sind.

Auf der in Figur 2 sichtbaren Rückseite des Schenkels 19 des Grundkörpers 16 der Backe 12 ist im Schenkel 19 eine Nut 30 ausgebildet, deren Nutprofil komplementär zum Kopfprofil des Kopfes 24 geformt ist. Die Nut 30 ist an ihrem dem freien Ende des Schenkels 19 zugewandten Ende geschlossen und an ihrem anderen Ende offen, so dass der Kopf 24 des Verbindungselementes 18 in die Nut eingeschoben werden kann.

Im Zuge der Herstellung der Brille wird das Verbindungselement 18 an einem vorgewählten Anbringungsort im Randbereich des Brillenglases 2 mit dessen Vorderseite 3 verklebt. Das Verkleben des Verbindungselementes 18 mit dem Brillenglas 2 wird weiter unten ausführlicher erläutert. Figur 3 zeigt das Verbindungselement 18, nachdem es mit dem Brillenglas 2 verklebt worden ist. Ferner zeigt Figur 3 den Grundkörper 16 der Backe 12 in derjenigen Relativstellung bezüglich des Brillenglases 2 und des Verbindungselements 18, die der Grundkörper 16 unmittelbar vor dem Zusammenfügen mit dem Verbindungselement 18 einnimmt. Das Zusammenfügen erfolgt in der Weise, dass der Grundkörper 16 aus seiner in Figur 3 gezeigten Stellung in Richtung des in Figur 3 gezeigten Pfeils auf das Verbindungselement 18 geschoben wird, wobei der Kopf 24 in die Nut 30 eintritt. Der Grundkörper 16 wird soweit auf das Verbindungselement 18 geschoben, dass das Verbindungselement 18 und der Grundkörper 16 ihre in Figur 4 gezeigte Relativstellung einnehmen, in der der Kopf 24 des Verbindungselementes 18 vollständig in die Nut 30 eingesetzt ist. Der Kopf 24 und die Nut 30 sind derart dimensioniert, dass deren Oberflächen zumindest teilweise unter Druck aneinander anliegen, so dass Haftreibung zwischen diesen Oberflächen auftritt und dadurch das Verbindungselement 18 und der Grundkörper 16 durch Kraftschluss miteinander verbunden sind.

Nachdem der Grundkörper 16 und das Verbindungselement 18 auf vorstehend beschriebene Weise zusammengefügt worden sind, ergibt sich die in Figur 5 gezeigte Anordnung aus dem linken Brillenglas 2 und der daran befestigten linken Backe 12.

Die rechte Backe 14 ist am rechten Brillenglas in gleicher Weise befestigt, wie es vorstehend für die linke Backe 12 und das linke Brillenglas 2 beschrieben worden ist. Ferner ist auch die Brücke 6 an ihren beiden Enden in gleicher Weise an den inneren Randbereichen der Brillengläser 2 und 4 befestigt, wie dies vorstehend für die linke Backe 12 und den linken Randbereich des linken Brillenglases 2 beschrieben worden ist.

Wie sich aus der vorstehenden Beschreibung ergibt, weisen die Brillengläser 2 und 4 keine Durchgangslöcher, Sacklöcher oder andere Ausnehmungen auf, die gebohrt oder gefräst werden müssen. Die Brücke 6 und die Backen 12 und 14 sind an den Vorderseiten 3 der Brillengläser ausschließlich durch Verkleben der jeweiligen Verbindungselemente mit den Brillengläsern befestigt.

Bei dem beschriebenen Ausführungsbeispiel sind das jeweilige Verbindungselement 18 und der zugehörige Grundkörper 8 bzw. 16 zunächst getrennt gefertigte Elemente. Dies ermöglicht es und ist bei dem beschriebenen Ausführungsbeispiel dazu ausgenutzt, den Grundkörper aus einem anderen Werkstoff herzustellen als dem Werkstoff des zugeordneten Verbindungselementes. Als Werkstoff für den Grundkörper wird zweckmäßigerweise ein Werkstoff gewählt, der im Hinblick auf die mechanischen Beanspruchungen der Brille ausreichende Festigkeit hat. Als Werkstoff für das jeweilige Verbindungselement wird ein Werkstoff gewählt, der weicher und elastischer als der des Grundkörpers ist, damit das Verbindungselement eine Puffer- oder Dämpfungsfunktion hat, die die Klebschicht zwischen den Fügeflächen vor stoßartigen Belastungen schützt und dadurch einem Bruch der Klebeverbindung vorbeugt. Vorzugsweise wird, wie dies bei dem beschriebenen Ausführungsbeispiel der Fall ist, das jeweilige Verbindungselement mit dem Brillenglas verklebt, bevor der Grundkörper der Backe bzw. der Brücke mit dem Verbindungselement verbunden wird. Dies erleichtert das Verkleben des Verbindungselementes mit dem Brillenglas. Die Puffer- bzw. Dämpferfunktion des Verbindungselementes ist jedoch auch dann vorhanden, wenn das Verbindungselement vor dem Verkleben mit dem Brillenglas mit dem Grundkörper verbunden wird oder wenn, wie dies auch möglich ist, im Verlauf der Herstellung der Brücke und der Backen das Verbindungselement am zugehörigen Grundkörper in einem Spritzgießverfahren angespritzt wird.

Bei dem vorstehend beschriebenen Ausführungsbeispiel sind die Verbindungselemente 18 auf den Vorderseiten 3 der Brillengläser 2 und 4 angeklebt und sind dementsprechend die Schenkel 19 der Backen 12 und 14 sowie die Enden der Brücke 6 auf den Vorderseiten 3 der Brillengläser angeordnet. Abweichend hiervon können die Verbindungselemente 18 jedoch auch auf den Rückseiten der Brillengläser angeklebt sein und die Schenkel der Backen sowie die Enden der Brücke dementsprechend auf den Rückseiten angeordnet sein. Es wird jedoch bevorzugt, die Verbindungselemente mit den Brillengläsern auf deren Vorderseiten zu verkleben, da bei Brillengläsern mit unterschiedlicher Korrektionswirkung die Unterschiede zwischen den Krümmungen der Vorderseiten geringer sind als die Unterschiede zwischen den Krümmungen der Rückseiten.

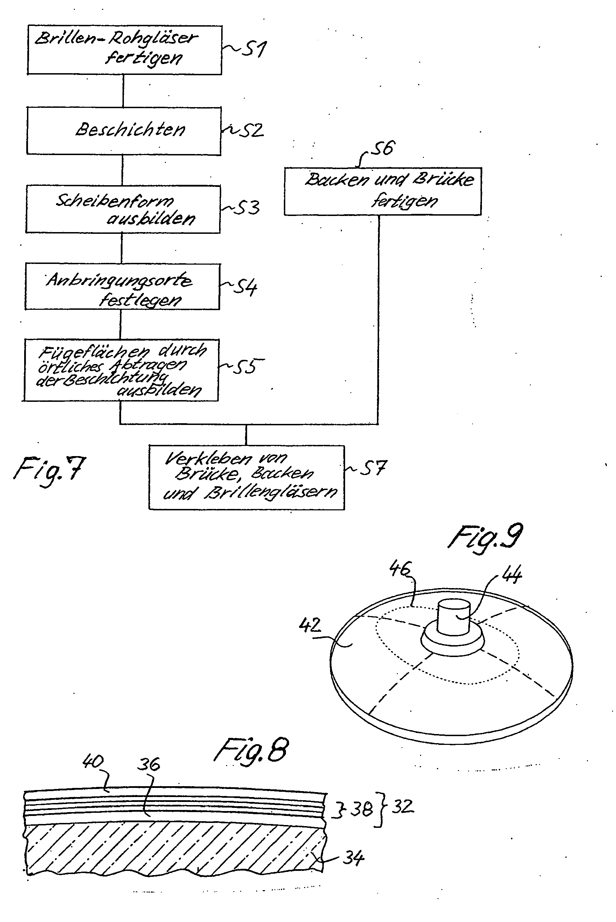

Im Folgenden wird unter Bezugnahme auf die Figuren 7 bis 12 das erfindungsgemäße Verfahren zur Herstellung einer randlosen Brille anhand von Beispielen erläutert. Figur 7 zeigt in Form eines Blockdiagrams die Verfahrensschritte, die bei dem erfindungsgemäßen Verfahren ausgeführt werden.

In einem ersten Schritt S1 werden zwei Brillen-Rohgläser aus einem Kunststoff beispielsweise durch Gießen und Pressen hergestellt. Als Kunststoff, d.h. als das Grundmaterial der herzustellenden Brillengläser, kommen die für Brillengläser üblichen Kunststoffe in Frage, wie beispielsweise Polycarbonate und Allyldiglykolkarbonat, das unter der Bezeichnung CR39 als Brillenglaswerkstoff bekannt ist.

In einem darauf folgenden zweiten Schritt S2 wird auf die Vorderseite und die Rückseite jedes Brillen-Rohglases eine Beschichtung aufgebracht. Die Beschichtung 32 besteht üblicherweise aus mehreren Schichten, wie dies in Figur 8 gezeigt ist. Beispielsweise wird zunächst auf das Grundmaterial 34, aus dem die Brillen-Rohgläser bestehen, durch Tauchen eine sogenannte Hartschicht 36 aufgebracht, die für Kratzfestigkeit der Oberflächen (Vorderseite und Rückseite) der Brillengläser sorgen soll. Auf die Hartschicht 36 kann dann durch Aufdampfen eine Entspiegelungsschicht 38 aufgebracht werden, die ihrerseits aus mehreren Schichten bestehen kann. Die Entspiegelungsschicht 38 soll regelmäßige Reflexion unterdrücken. Alternativ kann, wenn ein hoher Reflexionsgrad gewünscht wird, eine Verspiegelungsschicht aufgebracht werden. Als oberste Schicht wird beispielsweise eine Schmutz abweisende Schicht 40 aufgebracht, die hydrophobe und oleophobe Eigenschaften hat und dem Anhaften von Schmutz vorbeugen soll. Die Gesamtdicke der Beschichtung liegt im Bereich von weniger als 1 µm bis zu wenigen Mikrometern.

Im darauf folgenden Schritt S3 wird an den beschichteten Brillen-Rohgläsern die gewünschte Scheibenform ausgebildet. Zu diesem Zweck wird jedes beschichtete Brillen-Rohglas 42, das einen kreisförmigen Rand aufweist, üblicherweise an einem Glashalter 44 befestigt (siehe Figur 9), damit durch Fräsen und Schleifen des Brillen-Rohglases 42 von diesem soviel Material entfernt wird, dass ein Brillenglas mit der gewünschten Scheibenform erhalten wird. Die gewünschte Scheibenform 46 ist in Figur 9 gestrichelt dargestellt. Als Scheibenform wird üblicherweise die geometrische Gestalt des Randes eines Brillenglases bezeichnet. Als Ergebnis des Fräsens und Schleifens des jeweiligen Brillen-Rohglases 42 erhalten beispielsweise die beiden Brillengläser 2 und 4 des vorstehend erläuterten Ausführungsbeispiels die Ränder 5.

Ferner werden in einem Schritt S6 für jede Brille eine Brücke und zwei Backen gefertigt. Die Brücke und die Backen haben beispielsweise die Gestalt und Beschaffenheit, wie sie vorstehend für das erste Ausführungsbeispiel der Brille beschrieben worden sind. Dabei werden die Verbindungselemente 18 durch Spritzgießen aus einem spritzgießfähigen Kunststoff gefertigt. Wenn, wie dies bei dem ersten Ausführungsbeispiel der Brille der Fall ist, die Grundkörper der Backen und der Brücke ebenfalls aus Kunststoff bestehen, werden auch diese aus einem spritzgießfähigen Kunststoff spritzgegossen. Alternativ können jedoch die Grundkörper auch aus einem metallischen Werkstoff nach üblichen Metallbearbeitungsverfahren gefertigt werden. Bei dem vorstehend beschriebenen ersten Ausführungsbeispiel der Brille werden die Verbindungselemente und die Grundkörper zunächst als getrennte Elemente gefertigt, die erst nach dem Verkleben der Verbindungselemente mit der Vorderseite oder der Rückseite der Brillengläser miteinander kraftschlüssig oder auch formschlüssig verbunden werden. Wie bereits erwähnt wurde, kann diese Verbindung jedoch schon vor dem Verkleben der Verbindungselemente mit den Brillengläsern hergestellt werden. Ferner ist es möglich, die Verbindungselemente an dem jeweils zugehörigen Grundkörper unabhängig davon, ob er aus einem Kunststoff oder einem metallischen Werkstoff besteht, in einem Spritzgießverfahren anzuspritzen und dabei den Grundkörper mit dem Werkstoff des Verbindungselements teilweise oder vollständig zu ummanteln. Schließlich kann jede Brücke einschließlich ihrer beiden Verbindungselemente und jede Backe einschließlich ihres Verbindungselementes einstückig aus einem Kunststoff spritzgegossen werden. In jedem der vorstehend betrachteten Fälle wird an dem jeweiligen Verbindungselement eine im Wesentlichen ebene Fügefläche ausgebildet, die dazu bestimmt ist, mit einer komplementären Fügefläche auf der Vorderseite oder der Rückseite eines der beiden Brillengläsern fest verklebt zu werden. Bei dem vorstehend beschriebenen ersten Ausführungsbeispiel bildet die Grundfläche 22 der Platte 20 des Verbindungselementes 18 eine solche Fügefläche.

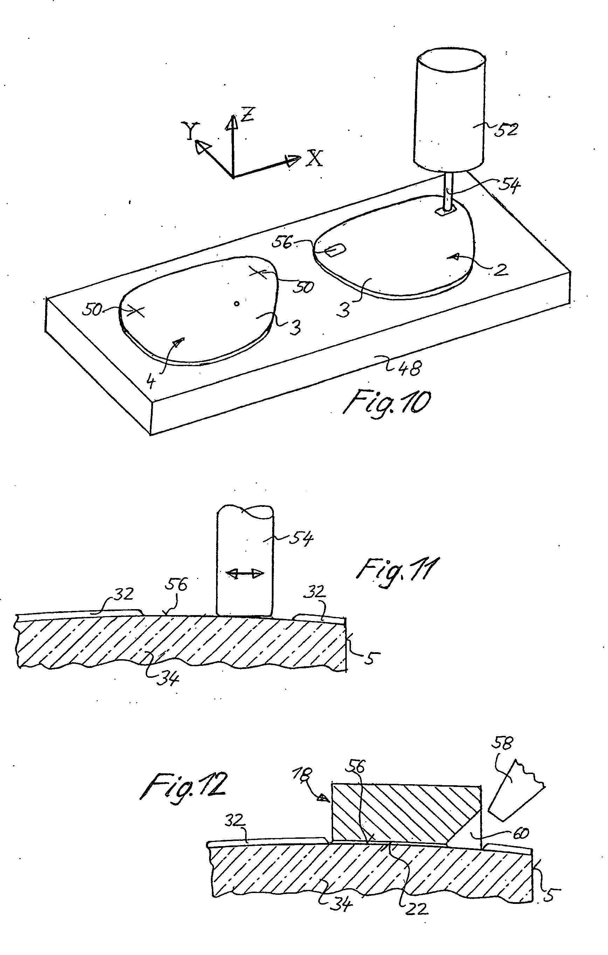

Nachdem die beiden Brillengläser mit ihrer gewünschten Scheibenform, die Brücke einschließlich ihrer beiden Verbindungselemente und die zwei Backen einschließlich ihres jeweiligen Verbindungselementes gefertigt worden sind, werden die Verbindungselemente mit den Vorderseiten der Brillengläser verklebt. Zu diesem Zweck werden die beiden Brillengläser 2 und 4 zunächst auf einer Montageplatte 48 beispielsweise mittels nicht dargestellter pneumatischer Haltevorrichtungen fixiert, wie dies in Figur 10 gezeigt ist. Dabei nehmen die beiden Brillengläser eine vorgegebene Relativstellung mit vorgegebener Brückenweite zwischen den Brillengläsern ein.

In einem Schritt S4 werden dann die Anbringungsorte für die Verbindungselemente der Backen und der Brücke an den Brillengläsern festgelegt, wobei diese Anbringungsorte bei dem ersten Ausführungsbeispiel auf den Vorderseiten 3 der Brillengläser 2 und 4 liegen. In Figur 10 sind die Anbringungsorte 50 am rechten Brillenglas 4 durch kreuzförmige Markierungen dargestellt. Es sei jedoch klargestellt, dass es nicht notwendig ist, derartige sichtbare Markierungen an den Brillengläsern auszubilden. Vielmehr reicht es aus und ist es bevorzugt, die Anbringungsorte dadurch festzulegen, dass ihre Lage in einem dreidimensionalen Koordinatensystem (siehe das X-Y-Z-Koordinatensystem in Figur 10) in und mittels einer nicht dargestellten Programmsteuervorrichtung programmiert wird.

Nachdem die Anbringungsorte für die Verbindungselemente der Backen und der Brücke festgelegt worden sind, wird in einem Schritt S5 die Beschichtung an den Anbringungsorten bzw. im Bereich der Anbringungsorte abgetragen, um dadurch Fügeflächen an den Brillengläsern 2 und 4 auszubilden. Der Zweck des Abtragens der Beschichtung besteht darin, das Grundmaterial der Brillengläser freizulegen, damit die jeweilige Fügefläche am Brillenglas die stoffliche Beschaffenheit des Grundmaterials des Brillenglases hat. Dementsprechend wird die Beschichtung im Bereich der auszubildenden Fügefläche vollständig, d.h. bis zur ganzen Dicke der Beschichtung abgetragen. Es ist weder notwendig noch beabsichtigt, dass dabei auch Grundmaterial abgetragen wird. Wenn jedoch zugleich mit dem Abtragen der Beschichtung auch Grundmaterial in geringer Tiefe - in einer Tiefe von wenigen Mikrometern - abgetragen wird, so hat sich dies als unschädlich erwiesen.

Zum Abtragen der Beschichtung im Bereich der auszubildenden Fügeflächen eignet sich grundsätzlich jedes Verfahren, mittels dessen die Beschichtung in einem definierten Bereich und im Wesentlichen beschränkt auf die Dicke der Beschichtung abgetragen werden kann.

Beispielsweise kann die Beschichtung abgetragen werden, durch Aufstrahlen von feinsten Strahlmittelteilchen, beispielsweise Strahlmittelteilchen in Form von Glasmehl. In diesem Fall ist es zweckmäßig, die Brillengläser im Bereich außerhalb der auszubildenden Fügeflächen mittels einer Folie abzudecken.

Ferner kann die Beschichtung beispielsweise abgetragen werden mittels eines Laserwerkzeugs, das einen Laserstrahl erzeugt, der auf der auszubildenden Fügefläche fokussiert wird und über den gesamten Bereich der auszubildenden Fügefläche verfahren wird. Dabei können die Energie des Laserstrahls und dessen Eindringtiefe genau dosiert werden, so dass in gewünschter Weise lediglich die Beschichtung abgetragen wird, ohne dass nennenswert Grundmaterial abgetragen wird. Mit ultrakurzen Laserpulsen ist ein besonders präziser Materialabtrag ohne Schmelzphase möglich.

Als vorteilhaft hat es sich erwiesen, die Beschichtung abzutragen mittels eines Stirnschleifwerkzeugs, das eine hochfrequente Drehbewegung oder Hin- und Herbewegung mit einer Frequenz im Bereich von 24 bis 30 kHz ausführt. Dies ist schematisch in den Figuren 10 und 11 gezeigt. Eine Schleifvorrichtung umfasst eine Antriebseinheit 52 und ein von der Antriebseinheit getragenes Stirnschleifwerkzeug 54. Die Schleifvorrichtung wird unter Steuerung durch die Programmsteuervorrichtung in der X-Y-Ebene zum jeweiligen Anbringungsort gefahren. In Figur 10 ist dies der Anbringungsort für die Backe am linken Brillenglas 2. Am Anbringungsort wird die Schleifvorrichtung in Z-Richtung abgesenkt, bis die Stirnfläche des Stirnschleifwerkzeugs 54 mit geringer Anpresskraft in Kontakt mit dem Brillenglas steht. Das Stirnschleifwerkzeug 54 führt eine hochfrequente Bewegung aus, beispielsweise eine Pendelbewegung in Y-Richtung mit einer Frequenz von 28 kHz. Dabei wird das Stirnschleifwerkzeug 54 beispielsweise zickzackförmig in Y-Richtung und in X-Richtung über den gesamten Bereich einer auszubildenden Fügefläche verfahren, so dass sich schließlich am Brillenglas eine Fügefläche ergibt, die in Form und Abmessungen im Wesentlichen der Fügefläche an dem Verbindungselement gleicht. Beispielhaft zeigt Figur 10 eine Fügefläche 56 für das linke Verbindungselement der Brücke. Die Anpresskraft des Stirnschleifwerkzeugs 54 und die Bearbeitungsdauer durch Schleifen werden durch Vorversuche ermittelt und so festgelegt, dass, wie bereits ausgeführt, die Beschichtung 32 im Bereich der auszubildenden Fügefläche 56 vollständig abgetragen wird, ohne dass nennenswert Grundmaterial abgetragen wird.

Es hat sich gezeigt, dass dann, wenn die Beschichtung in vorstehend beschriebener Weise durch Schleifen mit hoher Frequenz abgetragen wird, homogene Fügeflächen mit mikroskopischer Rauheit ausgebildet werden können, ohne dass Spannungen im Grundmaterial der Brillengläser erzeugt werden. Bei dem Schleifen mit hoher Frequenz werden die Brillengläser nicht in Schwingungen versetzt, wodurch einer Welligkeit der Fügeflächen vorgebeugt ist. Zudem ermöglicht das beschriebene Vorgehen eine rationelle Brillenherstellung, da der gesamte Schleifvorgang automatisiert werden kann und nur eine kurze Bearbeitungsdauer von wenigen Sekunden erfordert.

Nachdem im Schritt S5 die Fügeflächen durch örtliches Abtragen der Beschichtung ausgebildet worden sind und nachdem im Schritt S6 die Backen und die Brücke gefertigt worden sind, werden im Schritt S7 die Brücke, die Backen und die Brillengläser miteinander verklebt.

Während des Verklebens bleiben die Brillengläser 2 und 4 mit den daran ausgebildeten Fügeflächen vorzugsweise an der Montageplatte 48 fixiert, an der sie zum Zweck der Ausbildung der Fügeflächen fixiert worden sind. Ferner hat es sich als zweckmäßig erwiesen, die Fügeflächen der Verbindungselemente, also beispielsweise die Grundfläche 22 der Verbindungselemente 18 des ersten Ausführungsbeispiels der Brille, aufzurauen. Alternativ zu einem mechanischen Aufrauen durch Anschleifen kann die Klebefreudigkeit der Verbindungselemente dadurch erhöht werden, dass deren Fügeflächen mit Aceton vorbehandelt werden, indem die Fügeflächen mit einem mit Aceton getränkten Schwamm oder dergleichen überstrichen werden.

Es ist zwar möglich, den zum Verkleben verwendeten Klebstoff, beispielsweise einen Cyanacrylatklebstoff, auf die Fügefläche des jeweiligen Verbindungselementes 18 oder die Fügefläche 56 am Brillenglas aufzubringen, bevor das Verbindungselement am zugeordneten Anbringungsort angeordnet wird. Bevorzugt wird es jedoch, in der Weise vorzugehen, dass zunächst das jeweilige Verbindungselement 18 am zugeordneten Anbringungsort angeordnet und angedrückt wird, wie dies in Figur 12 gezeigt ist, bevor der Klebstoff zwischen die Fügefläche 56 am Brillenglas und die Fügefläche am Verbindungselement 18 eingebracht wird. In diesem Fall erfolgt das Einbringen des Klebstoffs mittels einer Dosiervorrichtung, von der in Figur 12 lediglich eine Düse 58 gezeigt ist. Um das Ansetzen der Düse 58 und das Einbringen des Klebstoffs zu erleichtern, kann, wie dies in Figur 12 gezeigt ist, das jeweilige Verbindungselement 18 mit einer Ausnehmung 60 versehen sein. Der in dosierter Menge eingebrachte Klebstoff verteilt sich aufgrund von in dem Spalt zwischen den beiden Fügeflächen wirkenden Kapillarkräften als dünne Klebschicht und bleibt auf den Spaltbereich zwischen den beiden Fügeflächen beschränkt, weil außerhalb dieses Spaltbereichs keine Kapillarkräfte wirken. Aufgrund dieses Effekts und der genauen Dosierung des Klebstoffs wird eine saubere Klebeverbindung erreicht, d.h. eine Klebeverbindung, bei der sich außerhalb des Bereichs, in dem sich die beiden Fügeflächen überdecken, praktisch kein Klebstoff vorhanden ist.

Wie bereits erwähnt, handelt es sich bei dem verwendeten Klebstoff beispiels- und vorzugsweise um einen Cyanacrylatklebstoff, der mittelviskos mit einer Viskosität im Bereich von 120 mPa·s bei 20°C ist oder - vorzugsweise - niedrigviskos mit einer Viskosität im Bereich von 7 mPa·s bei 20°C ist. Die Dauer, während der beim Verkleben das Verbindungselement und das Brillenglas aneinander gepresst werden müssen, beträgt bei diesen Klebstoffen wenige Sekunden, so dass auch das Verkleben in kurzer Zeit und rationell durchgeführt werden kann.

Nachdem im Schritt S7 auf vorstehend beschriebene Weise alle vier Verbindungselemente 18 mit den beiden Brillengläsern 2 und 4 verklebt worden sind, werden die Verbindungselemente auf die bereits vorstehend bei der Erläuterung des ersten Ausführungsbeispiels beschriebene Weise mit den Grundkörpern der Backen und der Brücke verbunden, so dass ein fertiges Brillenmittelteil, bestehend aus den zwei Brillengläsern, der Brücke und den Backen, vorliegt. Durch Anfügen des Stegbauteils und der Bügel wird die Brille zur fertigen randlosen Brille vervollständigt.

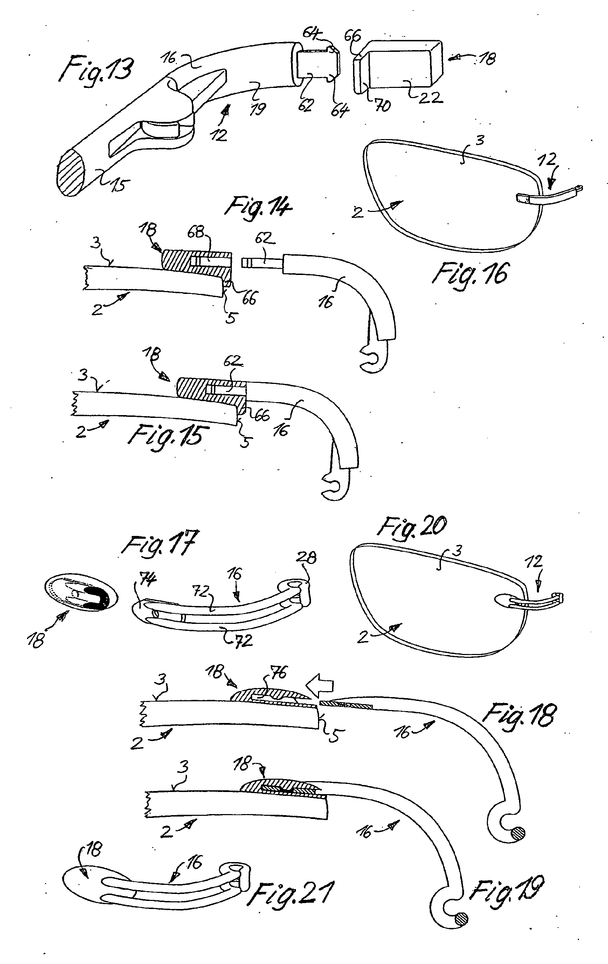

Im Folgenden werden weitere Ausführungsbeispiele von erfindungsgemäß hergestellten randlosen Brille anhand der Figuren 13 bis 20 erläutert. Die Figuren 13 und 17 zeigen jeweils in zu Figur 2 ähnlicher Weise eine perspektivische Ansicht des Grundkörpers 16 und des Verbindungselementes 18 der linken Backe 12 des jeweiligen Ausführungsbeispiels. Die Figuren 14 und 18 zeigen jeweils in zu Figur 3 ähnlicher Weise eine schematische Unteransicht des linken Randbereichs des linken Brillenglases 2, wobei der Zustand dargestellt ist, den das am Brillenglas 2 angeklebte Verbindungselement 18 und der zugeordnete Grundkörper 16 einnehmen, bevor sie zusammengefügt werden. Die Figuren 15 und 19 zeigen jeweils in zu Figur 4 ähnlicher Weise eine Unteransicht, in der der Zustand nach dem Zusammenfügen des Verbindungselementes 18 mit dem Grundkörper 16 dargestellt ist. Die Figuren 16 und 20 zeigen jeweils in zu Figur 5 ähnlicher Weise eine perspektivische Ansicht des linken Brillenglases 2 von vorn mit der daran befestigten linken Backe 12.

Diejenigen Elemente der weiteren Ausführungsbeispiele, die mit Elementen des ersten Ausführungsbeispiels der erfindungsgemäß hergestellten Brille übereinstimmen oder Elementen des ersten Ausführungsbeispiels entsprechen, sind mit denselben Bezugszeichen wie bei dem ersten Ausführungsbeispiel bezeichnet.

Bei dem zweiten Ausführungsbeispiel gemäß den Figuren 13 bis 16 ist der Grundkörper 16 der Backe 12 ein spritzgegossenes Kunststoffteil, das ähnlich wie der Grundkörper 16 des ersten Ausführungsbeispiels gestaltet ist. Abweichend von dem ersten Ausführungsbeispiel weist der Grundkörper 16 der Backe bei dem zweiten Ausführungsbeispiel jedoch am freien Ende des Schenkels 19 eine Stirnfläche auf, an der ein Haken 62 mit zwei Rastnasen 64 angeformt ist.

Das Verbindungselement 18 ist ein spritzgegossenes Kunststoffteil und hat im Wesentlichen die Form eines Quaders mit einem daran angeformten, an einem Ende der Grundfläche 22 von dieser vorstehenden Vorsprung 66. Im Verbindungselement 18 ist eine Ausnehmung 68 mit zwei Hinterscheidungen ausgebildet. Die Gestalt der Ausnehmung 68 und ihrer Hinterschneidungen ist der Gestalt des Hakens 62 derart angepasst, dass der Haken 62 mit seinen Rastnasen 64 in die Hinterschneidungen eingreifen bzw. einrasten kann.

Nachdem das Verbindungselement 18 mit dem linken Brillenglas 2 verklebt worden ist, wird es mit dem Grundkörper 16 zusammengefügt, indem der Haken 62 aus der in Figur 14 gezeigten Stellung in die Ausnehmung 68 geschoben wird, bis die Stellung gemäß Figur 15 erreicht ist. Dabei wird das Anschlusselement 18 elastisch aufgeweitet, bis die Rastnasen 64 am Ende des Einschiebevorgangs in die Hinterschneidungen der Ausnehmung 68 eingreifen können, so dass aufgrund dieses Eingriffs eine formschlüssige Rastverbindung hergestellt ist.

Bei diesem zweiten Ausführungsbeispiel weist das Verbindungselement 18 den Vorsprung 66 auf. Dieser umgreift den Rand 5 des Brillenglases 2. Das Verbindungselement 18 ist nicht nur an seiner Grundfläche 22 mit der Vorderseite 3 des Brillenglases 2 verklebt, sondern auch an der Innenseite 70 des Vorsprungs 66 mit dem Rand 5 verklebt. Hierbei handelt es sich jedoch lediglich um eine zusätzliche Verklebung, deren Fügeflächen wesentlich kleiner sind als die Fügeflächen auf der Vorderseite 3 des Brillenglases 2. Um diese zusätzliche Verklebung zu ermöglichen, ist es nicht notwendig, am Rand 5 des Brillenglases eine Beschichtung abzutragen, da dort nach der Ausbildung der Scheibenform ohnehin das Grundmaterial des Brillenglases freiliegt.

Bei dem dritten Ausführungsbeispiel gemäß den Figuren 17 bis 20 ist der Grundkörper 16 der Backe ein aus einem Metall gefertigtes Bauteil, das die in Figur 17 gezeigte Gestalt hat. Der Grundkörper 16 der Backe besteht aus zwei zueinander parallelen, gekrümmten Stäben 72, die an ihren einen Enden unter Bildung des Gelenkauges 28 ineinander übergehen und an ihren anderen Enden fest mit einer ovalen Platte 74 verbunden sind.

Das Verbindungselement 18 des dritten Ausführungsbeispiels ist ein spritzgegossenes Kunststoffteil, das eine ovale Grundfläche und eine gewölbte Oberfläche aufweist, so dass es insgesamt die Gestalt einer ovalen Linse hat. Das Verbindungselement 18 ist an seiner Grundfläche mit der Vorderseite 3 des Brillenglases 2 verklebt und weist einen im Wesentlichen parallel zu seiner Grundfläche verlaufenden Schlitz 76 auf. Gestalt und Abmessungen des Schlitzes 76 sind der Gestalt und den Abmessungen der Platte 74 und der mit diesen verbundenen Enden der Stäbe 72 derart angepasst, dass die Platte 74 in den Schlitz 76 geschoben werden kann, so dass sich die Relativanordnung von Verbindungselement 18 und Grundkörper 16 gemäß Figur 19 ergibt. In dem in Figur 19 gezeigten Zustand greift ein am Verbindungselement 18 ausgebildeter, in dessen Schlitz 76 ragender Vorsprung in ein Loch in der Platte 74, so dass auf diese Weise für eine formschlüssige Verbindung zwischen dem Verbindungselement 18 und dem Grundkörper 16 der Backe gesorgt ist.

Wie die Figuren 18 und 19 zeigen, erstrecken sich bei dem dritten Ausführungsbeispiel die Fügeflächen am Verbindungselement 18 und am Brillenglas 2 bis zu dessen Rand 5.

Während bei dem ersten Ausführungsbeispiel das Verbindungselement 18 auf der dem Brillenglas zugewandten Seite des Schenkels 19 des Grundkörpers 16 angeordnet ist, ist das Verbindungselement 18 bei dem zweiten und dem dritten Ausführungsbeispiel derart ausgebildet, dass es den Haken 62 am Ende des Schenkels 19 bzw. das eine Ende des Grundkörpers 16 vollständig umgibt. Auf diese Weise bildet das Verbindungselement des zweiten Ausführungsbeispiels und des dritten Ausführungsbeispiels jeweils einen Schuh, in den ein Ende des Grundkörpers gesteckt ist. Dieser Schuh wird, analog zu dem Verbindungselement 18 des ersten Ausführungsbeispiels, aus einem flexiblen Kunststoff mit geringerer Härte als der des Werkstoffs des Grundkörpers gefertigt, damit dieser Schuh die bereits vorstehend erörterte Dämpfungs- bzw. Pufferfunktion hat und die Klebschicht der Klebeverbindung vor Stoßbelastungen schützt.

In Abwandlung des dritten Ausführungsbeispiels, bei dem das Verbindungselement 18 und der Grundkörper 16 der Backe 12 zusammengesteckt werden, nachdem das Verbindungselement 18 mit der Vorderseite 3 des Brillenglases 2 verklebt worden ist, kann das Verbindungselement 18 mit gleicher äußerer Gestalt, wie sie in Figur 17 gezeigt ist, am Grundkörper 16 angespritzt werden. Als Ergebnis des Anspritzens ergibt sich dann die in Figur 21 gezeigte Backe 12. Das Verbindungselement 18 und der Grundkörper 16 sind in diesem Fall bereits fest miteinander verbunden, bevor das Verbindungselement 18 mit der Vorderseite 3 des Brillenglases 2 verklebt wird.

Im Hinblick auf das Verfahren zur Herstellung der Brille gemäß dem zweiten Ausführungsbeispiel und dem dritten Ausführungsbeispiel gelten die vorstehenden Erläuterungen zum erfindungsgemäßen Herstellungsverfahren.

Die Erfindung bezieht sich auf ein Verfahren zur Herstellung einer randlosen Brille, bei der Verbindungselemente der Backen und der Brücke der Brille mit der Vorderseite oder der Rückseite der Brillengläser verklebt sind. Bei dem Verfahren werden zunächst zwei Brillen-Rohgläser aus einem Kunststoff gefertigt, auf deren Vorder- und Rückseite eine Beschichtung aufgebracht wird. Die zwei beschichteten Brillen-Rohgläser werden in der Weise geschnitten und geschliffen, dass zwei Brillengläser mit einer gewünschten Scheibenform erhalten werden. An vorbestimmten Anbringungsorten für die Verbindungselemente der Backen und der Brücke auf der Vorder- oder der Rückseite der Brillengläser wird die Beschichtung zur Bildung von Fügeflächen abgetragen, die in Gestalt und Abmessungen im Wesentlichen den Fügeflächen der Verbindungselemente entsprechen. Die Verbindungselemente werden dann mit der Vorderseite bzw. mit der Rückseite der Brillengläser an den Anbringungsorten verklebt. Da im Bereich der Fügeflächen an den Brillengläsern deren Grundmaterial freiliegt, kann eine dauerhaft feste Klebeverbindung zwischen den Verbindungselementen und den Brillengläsern auf deren Vorder- oder Rückseite unter Verwendung an sich bekannter Klebstoffe hergestellt werden.

## Patentansprüche

1. Verfahren zur Herstellung einer randlosen Brille,
wobei die Brille aufweist
zwei Brillengläser (2, 4), eine zwischen den beiden Brillengläsern (2, 4) angeordnete Brücke (6), die die beiden Brillengläser (2, 4) miteinander verbindet,
zwei Backen (12, 14), die jeweils mit einem der zwei Brillengläser (2, 4) an einem von der Brücke (6) abgewandten Randbereich des Brillenglases verbunden sind, und
zwei Bügeln (15), die jeweils gelenkig mit einer der beiden Backen (12, 14) verbunden sind,
wobei das Verfahren die folgenden Schritte aufweist:
a) Fertigen von zwei Brillen-Rohgläsern (42) aus einem Kunststoff;
b) Bearbeiten der Brillen-Rohgläser (42) in der Weise, dass die zwei Brillengläser (2, 4) mit einer gewünschten Scheibenform (46) erhalten werden;
c) Fertigen der zwei Backen (12, 14), wobei jede der Backen ein Verbindungselement (18) mit einer Fügefläche zum Verbinden der Backe (12, 14) mit einem der zwei Brillengläser (2, 4) aufweist;
d) Fertigen der Brücke (6), wobei die Brücke zwei Verbindungselemente (18) mit einer Fügefläche zum Verbinden der Brücke mit den zwei Brillengläsern (2, 4) aufweist;
e) Festlegen der Anbringungsorte (50) für die Verbindungselemente (18) der Backen (12, 14) und der Brücke (6) auf der Vorderseite (3) oder der Rückseite der Brillengläser (2, 4); und
f) Verkleben der Verbindungselemente (18) der Backen (12, 14) und der Brücke (6) mit der Vorderseite (3) bzw. der Rückseite der Brillengläser (2, 4) an den Anbringungsorten (50),
wobei das Verfahren **gekennzeichnet ist durch** die folgenden zusätzlichen Schritte:
g) Aufbringen einer Beschichtung (32) auf die Vorderseite (3) und die Rückseite der Brillen-Rohgläser (42) nach Schritt a) und vor Schritt b), und
h) Abtragen der Beschichtung (32) an den Anbringungsorten (50) zur Bildung von Fügeflächen (56) an den Brillengläsern (2, 4) nach Schritt e) und vor Schritt f).

2. Verfahren nach Anspruch 1, **dadurch gekennzeichnet, dass** die aufgebrachte Beschichtung (32) zumindest eine Hartschicht (36) und eine Schmutz abweisende Schicht (40) umfasst.

3. Verfahren nach Anspruch 2, **dadurch gekennzeichnet, dass** die aufgebrachte Beschichtung (32) ferner eine Entspiegelungsschicht (38) oder eine Verspiegelungsschicht umfasst.

4. Verfahren nach einem der Ansprüche 1 bis 3, **dadurch gekennzeichnet, dass** die Beschichtung (32) an den Anbringungsorten (50) bis zur ganzen Dicke der Beschichtung (32) abgetragen wird.

5. Verfahren nach einem der Ansprüche 1 bis 4, **dadurch gekennzeichnet, dass** zur Bildung der Fügeflächen (56) an den Brillengläsern (2, 4) die Beschichtung (32) an den Anbringungsorten (50) in einem Bereich der Vorderseite (3) bzw. der Rückseite des jeweiligen Brillenglases (2, 4) abgetragen wird, der in Form und Abmessungen im Wesentlichen der Fügefläche des jeweils anzuklebenden Verbindungselementes (18) gleicht.

6. Verfahren nach Anspruch 5, **dadurch gekennzeichnet, dass** der Bereich im Wesentlichen eine Rechteckform hat.

7. Verfahren nach einem der Ansprüche 1 bis 6, **dadurch gekennzeichnet, dass** im Schritt h) die Beschichtung (32) abgetragen wird durch Schleifen oder Fräsen.

8. Verfahren nach Anspruch 7, **dadurch gekennzeichnet, dass** die Beschichtung (32) abgetragen wird mittels eines Stirnschleifwerkzeugs (54), das eine hochfrequente Drehbewegung oder Hin- und Herbewegung ausführt.

9. Verfahren nach Anspruch 8, dass die Frequenz der Drehbewegung oder der Hin- und Herbewegung im Bereich von 15 bis 40 kHz, vorzugsweise im Bereich von 24 bis 30 kHz liegt.

10. Verfahren nach einem der Ansprüche 1 bis 6, **dadurch gekennzeichnet, dass** im Schritt h) die Beschichtung (32) abgetragen wird durch Aufstrahlen von Strahlmittelteilchen.

11. Verfahren nach einem der Ansprüche 1 bis 6, **dadurch gekennzeichnet, dass** im Schritt h) die Beschichtung (32) abgetragen wird durch Bestrahlen mit Laserlicht.

12. Verfahren nach einem der Ansprüche 1 bis 11, **dadurch gekennzeichnet, dass** im Schritt f) zunächst das jeweilige Verbindungselement (18) am zugeordneten Anbringungsort (50) angeordnet und angedrückt wird und dann ein Klebstoff in dosierter Menge zwischen die Fügeflächen (56) am Brillenglas (2, 4) und am Verbindungselement (18) eingebracht wird.

13. Verfahren nach einem der Ansprüche 1 bis 12, **dadurch gekennzeichnet, dass** vor Schritt f) die Fügefläche des jeweiligen Verbindungselementes (18) aufgeraut wird.

14. Verfahren nach einem der Ansprüche 1 bis 12, **dadurch gekennzeichnet, dass** vor Schritt f) die Fügefläche des jeweiligen Verbindungselementes (18) mit Aceton behandelt wird.

15. Verfahren nach einem der Ansprüche 1 bis 14, **dadurch gekennzeichnet, dass** als Klebstoff zum Verkleben ein Cyanacrylatklebstoff verwendet wird.

16. Verfahren nach einem der Ansprüche 1 bis 15, **dadurch gekennzeichnet, dass** die Backen (12, 14) und die Brücke (6) jeweils gefertigt werden aus einem Grundkörper (8, 16) und dem Verbindungselement (18) bzw. den Verbindungselementen (18), wobei der Grundkörper (16) aus einem anderen Werkstoff gefertigt wird als dem Werkstoff des Verbindungselementes (18) bzw. der Verbindungselemente (18).

17. Verfahren nach Anspruch 16, **dadurch gekennzeichnet, dass** die Verbindungselemente (18) aus einem flexiblen Kunststoff mit geringer Härte gefertigt werden.

18. Verfahren nach Anspruch 17, **dadurch gekennzeichnet, dass** die Härte des Kunststoffs im Bereich von 40 bis 60 Shore D liegt.

19. Verfahren nach Anspruch 17 oder 18, **dadurch gekennzeichnet, dass** der Kunststoff ein aliphatisches, thermoplastisches Polyether-Polyurethan ist.

20. Verfahren nach einem der Ansprüche 16 bis 19, **dadurch gekennzeichnet, dass** der Grundkörper (8, 16) und das jeweilige Verbindungselement (18) getrennt gefertigt werden und miteinander durch Kraft- oder Formschluss verbunden werden.

21. Verfahren nach einem der Ansprüche 17 bis 19, **dadurch gekennzeichnet, dass** jedes Verbindungselement (18) mit dem zugehörigen Grundkörper (8, 16) durch Anspritzen des Verbindungselementes (18) in einem Spritzgießverfahren verbunden wird.

22. Verfahren nach einem der Ansprüche 16 bis 21, **dadurch gekennzeichnet, dass** der Grundkörper (8, 16) aus Metall gefertigt wird.

23. Verfahren nach einem der Ansprüche 16 bis 21, **dadurch gekennzeichnet, dass** der Grundkörper (8, 16) aus einem Kunststoff gefertigt wird.

24. Verfahren nach einem der Ansprüche 1 bis 15, **dadurch gekennzeichnet, dass** jede Backe einschließlich ihres Verbindungselementes einstückig aus einem Kunststoff gefertigt wird und dass die Brücke einschließlich ihrer Verbindungselemente einstückig aus einem Kunststoff gefertigt wird.

## Claims

1. Method for manufacturing rimless spectacles, the spectacles having
two spectacle lenses (2, 4), a bridge (6), which is arranged between the two spectacle lenses (2, 4) and connects the two spectacle lenses (2, 4) to each other,
two lugs (12, 14), which are respectively connected to one of the two spectacle lenses (2, 4) at an edge region of the spectacle lens facing away from the bridge (6), and
two side pieces (15), which are respectively connected to one of the two lugs (12, 14) in a hinged manner,
the method comprising the following steps:
a) producing two spectacle lens blanks (42) from a plastic;
b) machining the spectacle lens blanks (42) in such a way that the two spectacle lenses (2, 4) with a desired lens shape (46) are obtained;
c) producing the two lugs (12, 14), each of the lugs having a connecting element (18) with a joining area for connecting the lug (12, 14) to one of the two spectacle lenses (2, 4);
d) producing the bridge (6), the bridge having two connecting elements (18) with a joining area for connecting the bridge to the two spectacle lenses (2, 4);
e) determining the mounting locations (50) for the connecting elements (18) of the lugs (12, 14) and of the bridge (6) on the front side (3) or the rear side of the spectacle lenses (2, 4); and
f) adhesively bonding the connecting elements (18) of the lugs (12, 14) and of the bridge (6) to the front side (3) or the rear side of the spectacle lenses (2, 4) at the mounting locations (50), the method being **characterized by** the following additional steps:
g) application of a coating (32) to the front side (3) and the rear side of the spectacle lens blanks (42) after step a) and before step b),and
h) removal of the coating (32) at the mounting locations (50) to form joining areas (56) on the spectacle lenses (2, 4) after step e) and before step f).

2. Method according to Claim 1, **characterized in that** the applied coating (32) comprises at least a hard layer (36) and a dirt-repelling layer (40).

3. Method according to Claim 2, **characterized in that** the applied coating (32) also comprises an antireflection layer (38) or a reflective layer.

4. Method according to one of Claims 1 to 3, **characterized in that** the coating (32) is removed at the mounting locations (50) up to the entire thickness of the coating (32).

5. Method according to one of Claims 1 to 4, **characterized in that**, to form the joining areas (56) on the spectacle lenses (2, 4), the coating (32) is removed at the mounting locations (50) in a region of the front side (3) or the rear side of the respective spectacle lens (2, 4) that is substantially the same in shape and dimensions to the joining area of the connecting element (18) that is in each case to be adhesively attached.

6. Method according to Claim 5, **characterized in that** the region has substantially a rectangular shape.

7. Method according to one of Claims 1 to 6, **characterized in that**, in step h), the coating (32) is removed by grinding or milling.

8. Method according to Claim 7, **characterized in that** the coating (32) is removed by means of a face grinding tool (54), which performs a high-frequency rotating movement or back-and-forth movement.

9. Method according to Claim 8, **characterized in that** the frequency of the rotating movement or of the back-and-forth movement lies in the range from 15 to 40 kHz, preferably in the range from 24 to 30 kHz.

10. Method according to one of Claims 1 to 6, **characterized in that**, in step h), the coating (32) is removed by blasting with particles of an abrasive medium.

11. Method according to one of Claims 1 to 6, **characterized in that**, in step h), the coating (32) is removed by irradiating with laser light.

12. Method according to one of Claims 1 to 11, **characterized in that**, in step f), firstly the respective connecting element (18) is arranged at the assigned mounting location (50) and pressed in place and then an adhesive is introduced in a metered amount between the joining areas (56) on the spectacle lens (2, 4) and on the connecting element (18).

13. Method according to one of Claims 1 to 12, **characterized in that**, before step f), the joining area of the respective connecting element (18) is roughened.

14. Method according to one of Claims 1 to 12, **characterized in that**, before step f), the joining area of the respective connecting element (18) is treated with acetone.

15. Method according to one of Claims 1 to 14, **characterized in that** a cyanoacrylate adhesive is used as the adhesive for the adhesive bonding.

16. Method according to one of Claims 1 to 15, **characterized in that** the lugs (12, 14) and the bridge (6) are respectively produced from a main body (8, 16) and the connecting element (18) or connecting elements (18), wherein the main body (16) is produced from a different material than the material of the connecting element (18) or connecting elements (18).

17. Method according to Claim 16, **characterized in that** the connecting elements (18) are produced from a flexible plastic with low hardness.

18. Method according to Claim 17, **characterized in that** the hardness of the plastic lies in the range from 40 to 60 Shore D.

19. Method according to Claim 17 or 18, **characterized in that** the plastic is an aliphatic, thermoplastic polyether-polyurethane.

20. Method according to one of Claims 16 to 19, **characterized in that** the main body (8, 16) and the respective connecting element (18) are produced separately and are connected to each other by force- or form-fitting engagement.

21. Method according to one of Claims 17 to 19, **characterized in that** each connecting element (18) is connected to the associated main body (8, 16) by the connecting element (18) being moulded on in an injection-moulding process.

22. Method according to one of Claims 16 to 21, **characterized in that** the main body (8, 16) is produced from metal.

23. Method according to one of Claims 16 to 21, **characterized in that** the main body (8, 16) is produced from a plastic.

24. Method according to one of Claims 1 to 15, **characterized in that** each lug, including its connecting element, is produced in one piece from a plastic and **in that** the bridge, including its connecting elements, is produced in one piece from a plastic.

## Revendications

1. Procédé de fabrication de lunettes sans monture,
les lunettes présentant :
deux verres de lunette (2, 4), un pontet (6) disposé entre les deux verres de lunette (2, 4), reliant ensemble les deux verres de lunette (2, 4),
deux tenons (12, 14), chacun relié à l'un des deux verres de lunette (2, 4) en une zone de bordure, opposée au pontet (6) du verre de lunette, et
deux branches (15), chacune reliée de manière articulée à l'un des deux tenons (12, 14),
le procédé présentant les étapes suivantes :
a) fabrication de deux verres bruts de lunette (42) en une matière synthétique ;
b) usinage des verres bruts de lunette (42), de manière à obtenir les deux verres de lunette (2, 4) avec une forme discoïde (46) souhaitée ;
c) fabrication des deux tenons (12, 14), chacun des tenons présentant un élément de liaison (18) avec une face de joint pour la liaison du tenon (12, 14) à l'un des deux verres de lunette (2, 4) ;
d) fabrication du pontet (6), le pontet présentant deux éléments de liaison (18) avec une face de joint pour la liaison du pontet aux deux verres de lunette (2, 4) ;
e) fixation des sites de montage (50) pour les éléments de liaison (18) des tenons (12, 14) et du pontet (6) sur la face avant (3) ou la face arrière des verres de lunette (2, 4) ; et
f) collage des éléments de liaison (18) des tenons (12, 14) et du pontet (6), sur leurs faces de joint, à la face avant (3) ou à la face arrière des verres de lunette (2, 4), sur les sites de montage (50),
le procédé étant **caractérisé par** les étapes supplémentaires suivantes :
g) application d'un revêtement (32) sur la face avant (3) et la face arrière des verres bruts de lunette (42) après l'étape a) et avant l'étape b), et
h) retrait du revêtement (32) sur les sites de montage (50) pour former des faces de joint (56) sur les verres de lunette (2, 4) après l'étape e) et avant l'étape f).

2. Procédé selon la revendication 1, **caractérisé en ce que** le revêtement (32) appliqué comprend au moins une couche dure (36) et une couche (40) repoussant les souillures.

3. Procédé selon la revendication 2, **caractérisé en ce que** le revêtement (32) appliqué comprend en outre une couche anti-reflets (38) ou une couche d'argenture.

4. Procédé selon l'une des revendications 1 à 3, **caractérisé en ce que** le revêtement (32) est retiré aux sites de montage (50) jusqu'à l'épaisseur complète du revêtement (32).

5. Procédé selon l'une des revendications 1 à 4, **caractérisé en ce que**, pour former les faces de joint (56) sur les verres de lunette (2, 4), le revêtement (32) est retiré sur les sites de montage (50), dans une zone de la face avant (3) ou de la face arrière du verre de lunette (2, 4) respectif, qui est sensiblement identique, en forme et en dimensions, à la face de joint de l'élément de liaison (18) respectif à coller.

6. Procédé selon la revendication 5, **caractérisé en ce que** la zone présente sensiblement une forme rectangulaire.

7. Procédé selon l'une des revendications 1 à 6, **caractérisé en ce qu'**à l'étape h), le revêtement (32) est retiré par meulage ou fraisage.

8. Procédé selon la revendication 7, **caractérisé en ce que** le revêtement (32) est retiré au moyen d'un outil de meulage en bout (54), accomplissant un mouvement de rotation à haute fréquence ou un mouvement en va-et-vient à haute fréquence.

9. Procédé selon la revendication 8, **caractérisé en ce que** la fréquence du mouvement de rotation ou du mouvement en va-et-vient est comprise entre 15 et 40 kHz, de préférence entre 24 et 30 kHz.

10. Procédé selon l'une des revendications 1 à 6, **caractérisé en ce qu'**à l'étape h), le revêtement (32) est retiré par grenaillage avec des particules d'agent de grenaillage.

11. Procédé selon l'une des revendications 1 à 6, **caractérisé en ce qu'**à l'étape h), le revêtement (32) est retiré par irradiation à la lumière laser.

12. Procédé selon l'une des revendications 1 à 11, **caractérisé en ce qu'**à l'étape f), l'élément de liaison (18) respectif est d'abord disposé sur le site de montage (50) associé et pressé, avant qu'un adhésif soit introduit en quantité dosée entre les faces de joint (56) sur le verre de lunette (2, 4) et sur l'élément de liaison (18).

13. Procédé selon l'une des revendications 1 à 12, **caractérisé en ce qu'**avant l'étape f), la face de joint de l'élément de liaison (18) respectif est rendue rugueuse.

14. Procédé selon l'une des revendications 1 à 12, **caractérisé en ce qu'**avant l'étape f), la face de joint de l'élément de liaison (18) respectif est traitée à l'acétone.

15. Procédé selon l'une des revendications 1 à 14, **caractérisé en ce qu'**un adhésif de type cyanoacrylate est utilisé comme adhésif pour le collage.

16. Procédé selon l'une des revendications 1 à 15, **caractérisé en ce que** les tenons (12, 14) et le pontet (6) sont fabriqués respectivement à partir d'un corps de base (8, 16) et de l'élément de liaison (18) ou des éléments de liaison (18), le corps de base (16) étant fabriqué en un autre matériau que le matériau de l'élément de liaison (18) ou des éléments de liaison (18).

17. Procédé selon la revendication 16, **caractérisé en ce que** les éléments de liaison (18) sont fabriqués en une matière synthétique flexible à faible dureté.

18. Procédé selon la revendication 17, **caractérisé en ce que** la dureté de la matière synthétique est comprise entre 40 et 60 Shore D.

19. Procédé selon la revendication 17 ou la revendication 18, **caractérisé en ce que** la matière synthétique est un polyuréthane polyéther aliphatique thermoplastique.

20. Procédé selon l'une des revendications 16 à 19, **caractérisé en ce que** le corps de base (8, 16) et l'élément de liaison (18) respectif sont fabriqués séparément et reliés ensemble par une liaison à interaction de forces ou à ajustement de formes.

21. Procédé selon l'une des revendications 17 à 19, **caractérisé en ce que** chaque élément de liaison (18) est relié au corps de base (8, 16) correspondant par injection de l'élément de liaison (18) au moyen d'un procédé de moulage par injection.

22. Procédé selon l'une des revendications 16 à 21, **caractérisé en ce que** le corps de base (8, 16) est fabriqué en métal.

23. Procédé selon l'une des revendications 16 à 21, **caractérisé en ce que** le corps de base (8, 16) est fabriqué en une matière synthétique.

24. Procédé selon l'une des revendications 1 à 15, **caractérisé en ce que** chaque tenon, y compris son élément de liaison, est fabriqué d'une seule pièce en une matière synthétique, et **en ce que** le pontet, y compris ses éléments de liaison, est fabriqué d'une seule pièce en une matière synthétique.
